(19) Europäisches Patentamt
European Patent Office
Office européen des brevets

(11) EP 0 562 455 B1

(12) **EUROPEAN PATENT SPECIFICATION**

(45) Date of publication and mention
of the grant of the patent:
**05.03.1997 Bulletin 1997/10**

(51) Int Cl.⁶: **H02P 6/00**

(21) Application number: **93104429.1**

(22) Date of filing: **18.03.1993**

(54) **A stand-by circuit for controlling the supply of current to a driver circuit for a DC electric motor**

Bereitschaftsschaltung zur Regelung der Stromversorgung für eine Treiberschaltung eines elektrischen Gleichstrommotors

Circuit en état de veille pour commander l'alimentation en courant pour un circuit d'attaque d'un moteur électrique à courant continu

(84) Designated Contracting States:
**DE ES FR GB SE**

(30) Priority: **26.03.1992 IT TO920266**

(43) Date of publication of application:
**29.09.1993 Bulletin 1993/39**

(73) Proprietor: **MAGNETI MARELLI S.p.A.**
**20145 Milano (IT)**

(72) Inventors:
• **Salerno, Franco**
**I-10091 Alpignano (Torino) (IT)**
• **Mastella, Paolo**
**I-15020 Camino (Alessandria) (IT)**

(74) Representative: **Quinterno, Giuseppe**
**c/o JACOBACCI & PERANI S.p.A.**
**Corso Regio Parco, 27**
**10152 Torino (IT)**

(56) References cited:
• **MACHINE DESIGN, vol. 59, no. 26, 12 November 1987, Cleveland US, pp. 145-146; L. HADLEY : 'Simplified DC brushless motor control from a serial bus'**
• **ELECTRONIC DESIGN, vol. 28, no. 14, 5 July 1980, Hasbrouck Heights, NJ, US; 'Reduce power dissipation in DC stepper motors'**
• **PATENT ABSTRACTS OF JAPAN vol. 11, no. 220 (E-524)(2667) 16 July 1987 ; & JP-A-62 040 094**
• **PATENT ABSTRACTS OF JAPAN vol. 12, no. 83 (M-677)(2930) 16 March 1988 ; & JP-A-62 225 105**
• **ELECTRONIC COMPONENTS AND APPLICATIONS, vol. 10, no.1, 1990, pp. 2-11; C. POUILLOUX : 'Full-wave sensorless drive ICs for brushless DC motors'**

## Description

The present invention relates to a stand-by circuit for control of the supply of current to a driver circuit for a DC electric motor, in particular a brushless motor of the type which does not have sensors for detecting the angular position of the rotor.

More specifically the invention relates to a stand-by circuit for controlling the current supply to driver circuit which has an input for a command signal indicative of the required speed of rotation of the motor, in which the said command signal may be a linear analogue type or of fixed frequency variable duty cycle digital type (PWM).

A driver circuit of the above-mentioned type is known from "Electronic Components and Applications", Vol. 10, No.1, 1990, pages 2-11; C.POUILLOUX: "Full-wave sensorless drive ICs for brushless DC motors". The stand-by function is performed by a protection (thermal) circuit having a TEST pin and requiring an injection of current (>600 µA) to turn-off the output stages of the driver circuit. Additional circuitries are necessary for generating the current in the TEST pin.

The document "Electronic Design" Vol.28, No.14, July 1980, Hasbrouck Heights, New Jersey: "Reduce power dissipation in Dc stepper motors" relates to a driver circuit for a stepper motor clocked by a pulse source. The output stages of the circuit are disconnected by AND gates. A pulse detector including a capacitor and charge and discharge resistors disables the AND gates when no clock signal is detected. A stand-by circuit of this type is not adapted to be used for DC motors.

The stand-by circuit of the invention is characterised by the fact that it comprises

an input terminal intended to be connected to the input of the driver circuit,
a capacitor,
first and second current generators,
commutation circuit means operable to connect the said first or second current generator to the capacitor in a selective manner,
a first comparator circuit with an input connected to the said input terminal and its output coupled to the said commutation circuit means in such a way that when the signal applied to the said input terminal exceeds a predetermined threshold the said commutation means connect the capacitor to the first current generator to charge the said capacitor at a constant current, and when the said signal is less than the said threshold the commutation means uncouple the capacitor from the first current generator and couple it to the second generator in such a way that it discharges it at a constant current, and
a second comparator circuit operable to emit at its output an enablement signal capable of allowing supply of current to the said driver circuit when the voltage of the capacitor exceeds a predetermined threshold.

According to a further characteristic, the said first generator is preferably arranged to generate a constant current which is greater than the current generated by the said second generator.

Furthermore, the said second comparator circuit is conveniently of the hysteresis type.

Further characteristics and advantages of the stand-by circuit according to the invention will become apparent from the following detailed description with reference to the annexed drawings, provided purely by way of non-limitative example, in which:

Figure 1 is a block diagram which shows a stand-by circuit according to the invention connected to a power supply for a brushless electric motor driver circuit;
Figure 2 is a circuit diagram partially in block diagram form of the stand-by circuit of Figure 1,
Figure 3 shows as an example the value of the signal applied to the input as a function of time, and the values of two signals developed in the stand-by circuit, for the case in which the input signal is of linear analogue type;
Figure 4 is a series of three diagrams which show exemplary variations, as a function of time, of the signal applied to the input of the stand-by circuit and two signals developed in this circuit, for the case in which the input signal is of PWM digital type; and
Figure 5 is a detailed circuit diagram of one embodiment of the stand-by circuit according to the invention.

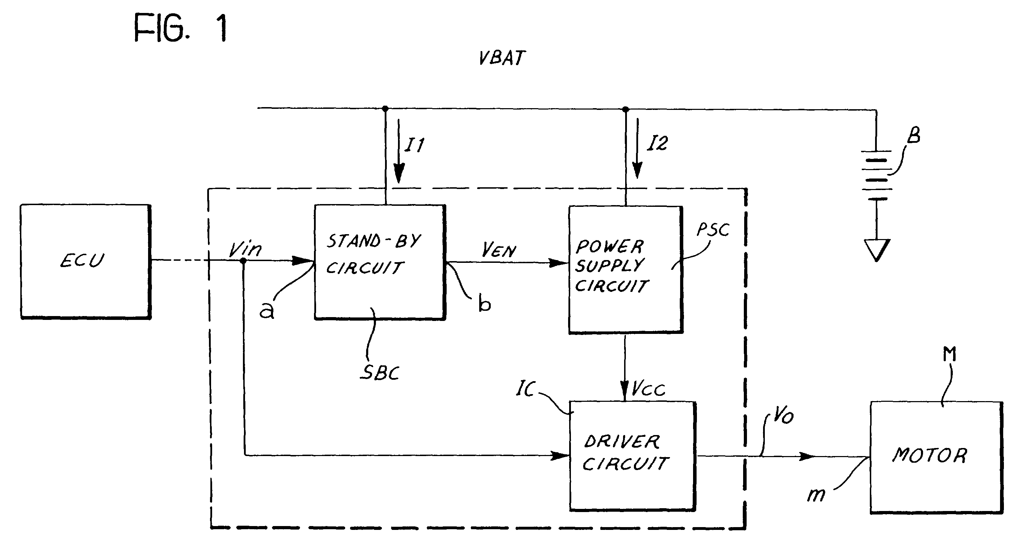

In Figure 1 there is shown, in block diagram form, a system for controlling a brushless motor, example for use on board a motor vehicle. In this Figure the brushless electric motor is indicated M and has an input m to which, in operation, is applied an analogue control signal indicated $V_o$ for controlling speed of rotation.

This signal is applied to the motor M by a driver circuit IC which functions as an interface between the motor M and an electronic control unit ECU. This unit, in operation, emits at its output a command signal $V_{in}$ indicative of the required speed of rotation of the motor M.

In such applications the unit ECU can be formed by a microprocessor, and in this case the signal $V_{in}$ is typically of the variable duty cycle digital type (signal of PWM type). In other applications the control unit ECU could emit at its output a speed control signal of linear analogue type, generally varying rather slowly.

The control circuit or interface IC is conveniently made in such a way as to be able to accept equally well at its input a PWM type signal or else a linear analogue signal, and in any case to provide at its output an analogue signal $V_0$ for providing speed control of the motor M.

The signal $V_{in}$ can accordingly be of variable duty cycle digital type or of analogue type.

The driver circuit IC is connected to a power supply circuit PSC which has an input connected to a DC voltage source B such as the battery on board a motor vehicle, which supplies a DC voltage VBAT.

The reference SBC indicates a stand-by circuit which has an input a connected to the input of the driver circuit IC, and an output b connected to a control input of the power supply circuit PSC. The stand-by circuit SBC is also moreover connected to the source B.

The current consumed by the stand-by circuit SBC has been indicated I1 whilst the current consumed by the power supply circuit PSC has been indicated I2.

As will appear more clearly hereinbelow, in operation the stand-by circuit SBC detects the presence or absence of the input signal $V_{in}$, and correspondingly turns the power supply circuit PSC on or off. In this way it is possible to reduce current consumption discharging the source B.

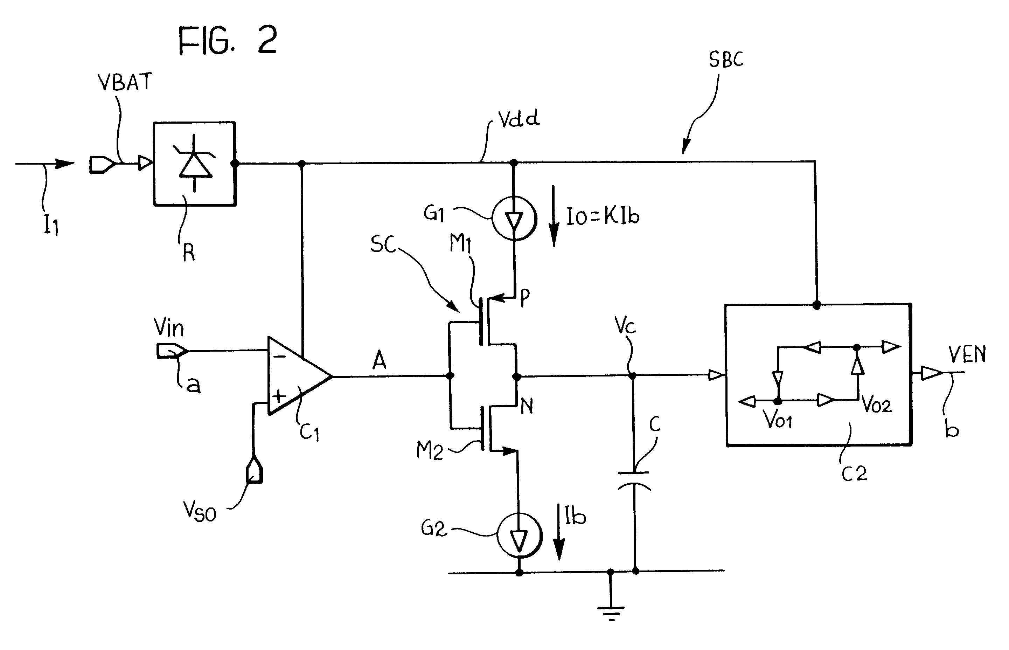

With reference to Figure 2, a stand-by circuit SBC according to the invention comprises a voltage stabiliser R the input of which is connected to the source B and the output from which provides a stabilised supply voltage Vdd which supplies the remaining circuitry.

The reference C1 in Figure 2 indicates a threshold comparator of inverting type having one input connected to the input terminal a, to receive the signal $V_{in}$, and the other input connected to a reference or threshold voltage source VsO.

The output of the comparator C1 is connected to a commutation circuit generally indicated SC, which comprises two transistors M1 and M2 of MOS type. These transistors have their respective gates connected to the output of the comparator C1, their respective drains connected together and to one terminal of a capacitor C the other terminal of which is connected to earth.

The transistor M1 is of P type. Between the source of the transistor and the output of the voltage stabiliser R is connected a current generator G1 arranged to deliver a constant current Ia.

The transistor M2 is of N type. Between the source of this transistor and earth is disposed a second current generator G2 arranged to generate a constant current Ib in the sense indicated in the Figure.

Conveniently, the magnitude of the current Ia generated by G1 is greater than the magnitude of the current Ib generated by G2.

$$Ia = K \cdot Ib \qquad K > 1$$

A second threshold comparator circuit is indicated C2, which preferably, although not necessarily, is of the hysteresis type with an upper threshold Vs2 and a threshold Vs1. In the illustrated embodiment this comparator is of the non-inverting type and its input is connected to the non-earthed terminal of capacitor C.

The output of the comparator C2 represents the output of the whole stand-by circuit SBC.

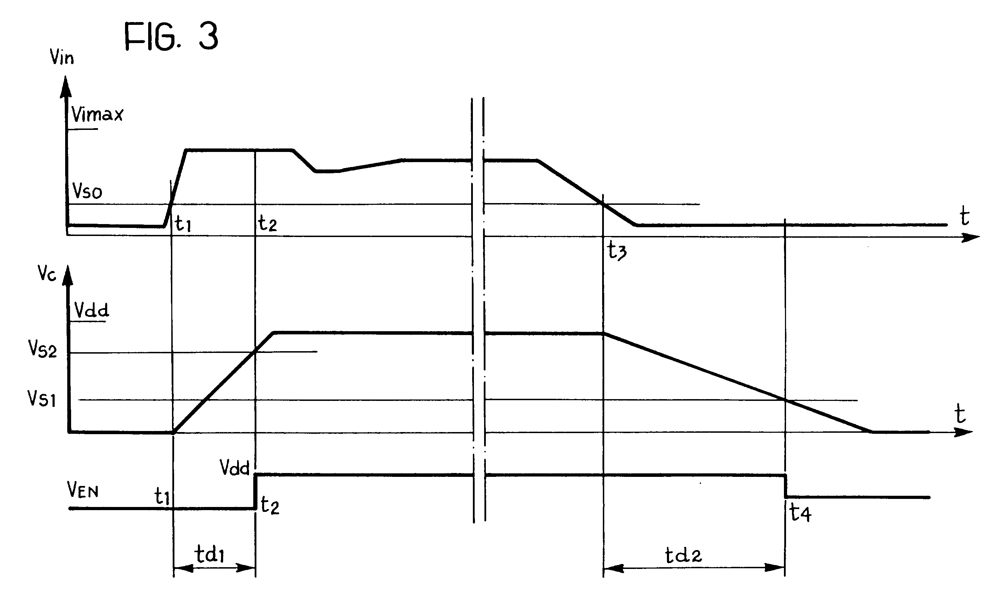

If the input signal $V_{in}$, is of linear analogue type, the stand-by circuit SBC functions in a manner which will now be described with reference to Figures 2 and 3.

If the analogue input signal $V_{in}$ is less than the threshold Vso of the comparator C1, the output of this comparator remains at "high" level so that the transistor M2 behaves as a closed switch, whilst the transistor M1 behaves as an open switch. The capacitor C remains discharged. The voltage $V_c$ applied to the input of the comparator C2 is nil and the signal Ven provided at the output of this comparator is at "low" level as appears in the left hand part of Figure 3. This signal constitutes the enabling/disabling signal of the power supply circuit PSC of Figure 1. Accordingly if the signal $V_{in}$ is less than the threshold of the comparator C1, the signal $V_{en}$ emitted by the stand-by circuit maintains the power supply circuit PSC "turned off".

As soon as the analogue input signal $V_{in}$ exceeds the threshold Vso of the comparator C1, as is shown at the instant $t_1$ in Figure 3, the output of this comparator passes to the "high" level so that the transistor M2 is turned off and the transistor M1 is rendered conductive. Consequently, the current generator G1 is coupled to the capacitor C, which accordingly charges at constant current, and the voltage $V_c$ across its terminals increases in a linear manner as is shown in Figure 3. As soon as the voltage Vc exceeds the upper threshold Vs2 of the comparator C2, the output $V_{en}$ of this comparator passes to the "high" level as is shown at instant $t_2$ of Figure 3. Starting from this instant the power supply circuit PSC of Figure 1 is "turned on".

The power supply circuit PSC is turned on with a delay td1 = $t_2$ - $t_1$ which is given by:

$$td1 = (Vs2/K \cdot Ib) \, C$$

As long as the analogue input signal $V_{in}$ is maintained above the threshold Vso of the comparator C1, the power supply circuit PSC remains turned on.

If the signal $V_{in}$ becomes lower, and at a certain point falls below the threshold Vso of the comparator C1, as shown at the instant $t_3$ of Figure 3, the output of this comparator returns to the "low" level, the transistor M1 turns off while the transistor M2 couples the current generator G2 to the capacitor C. This capacitor discharges accordingly at constant current and the voltage across its terminals falls linearly, as shown in Figure 3. As soon as the voltage Vc falls below the threshold Vs1 of the comparator C2, the signal $V_{en}$ provided at the output of this latter returns to the "low" level as is shown at the instant $t_4$ of Figure 3. The power supply circuit PSC is again "turned off".

The power supply circuit PSC is turned off with a delay td2 = $t_4$ - $t_3$ given by:

$$td2 = \frac{Vdd - Vs1}{I_b}C$$

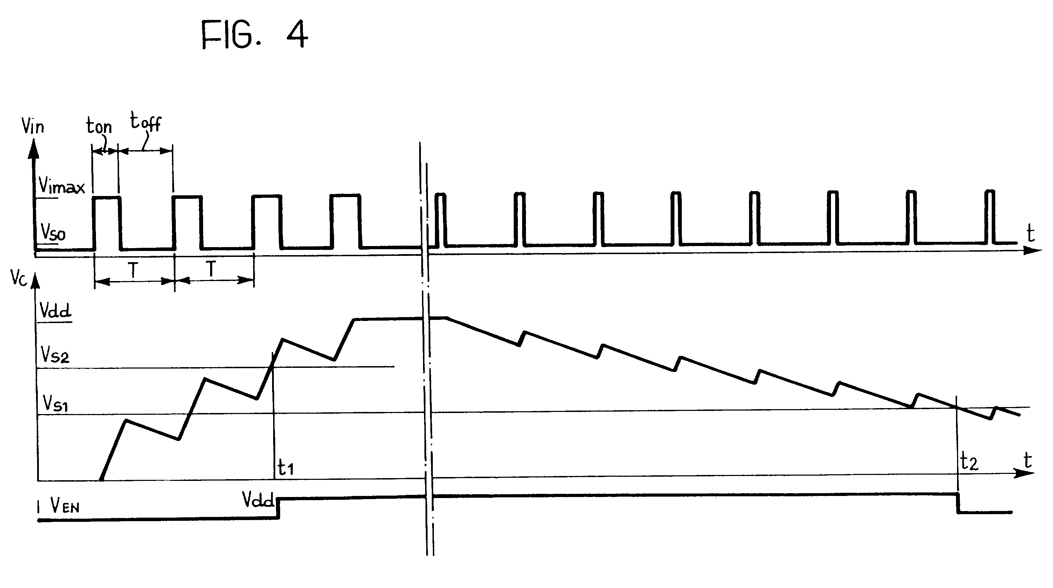

If the input signal $V_{in}$ is of digital type at a fixed frequency $f = 1/T$ and a variable duty cycle, the stand-by circuit SBC functions in a way which will now be described with reference to Figures 2 and 4.

The threshold voltage Vso of the comparator C1 lies conveniently between the voltage levels which correspond to the "high" (on) condition and the "low" (off) condition of the input signal $V_{in}$. Consequently the signal $V_{in}$ crosses the threshold Vso at each commutation of level, with a duty-cycle $d = t_{on}/T$. The output of the comparator C1 therefore commutes cyclically with the same frequency and with the same duty cycle as the input signal $V_{in}$. When the input signal $V_{in}$ is at the "high" level the transistor M1 couples the current generator G1 to the capacitor C, whilst the transistor M2 uncouples the generator G2 from the said capacitor. Consequently, when the input signal $V_{in}$ is at the "high" level the capacitor C charges at constant current and its voltage increases linearly as shown in Figure 4.

Each time that the input signal $V_{in}$ is at the "low" (off) level the transistor M1 is switched off and uncouples the generator G1 from the capacitor C while the transistor M2 couples the current generator G2 to this capacitor which, therefore, discharges at constant current and its voltage decreases linearly as can be seen in Figure 4.

If the current generated by the generator G2 is less than that generated by the generator G1, and if the duty cycle of the input signal $V_{in}$ is greater than a minimum value $d_m$, the mid voltage $V_c$ increases until it exceeds the threshold Vs2 as indicated at the instant t1 in Figure 4. The output of the comparator C2 accordingly passes to the high level and enables the operation of the power supply circuit PSC.

As long as the duty cycle of the input signal $V_{in}$ is maintained above the minimum value $d_m$, the output of the comparator C2 remains at high level continuing to enable the power supply circuit PSC.

If the duty cycle of the signal $V_{in}$ falls below the minimum value, as appears in the right hand part of Figure 4, at each period of this signal the capacitor C is discharged more than re-charged, so that the average value of the voltage across the terminals of this capacitor falls until it intersects the threshold Vs1 of the comparator C2 at an instant indicated $t_2$ in Figure 4.

This causes the signal $V_{en}$ emitted by the stand-by circuit to pass to the "low" level and accordingly turns off the power supply circuit PSC.

As far as the minimum duty cycle $d_m$ of the input signal $V_{in}$ is concerned, which allows the power supply circuit PSC to be turned on, it can easily be established that this is given by:

$$d_m = 1/(K + 1)$$

in which K is the ratio between the currents generated by the generators G1 and G2.

When the duty-cycle d of the input signal is greater than $d_m$, the power supply circuit PSC is turned on with a delay $td_{on}$ which is given by the following expression:

$$td_{on} = [C(Vs2/Ib)]/[(K+1)d-1]$$

It can further easily be verified that when the duty cycle becomes less than $d_m$ the power supply circuit PSC is "turned off" with a delay given by:

$$td_{off} = \{[C(Vdd-Vs1)]/Ib\}/[(K+1)d-1]$$

As can be also established, both the threshold duty cycle $d_m$ and the delay times for turning the power supply circuit PSC on and off depend substantially only on the voltage and current values, but not on the frequency of the input signal.

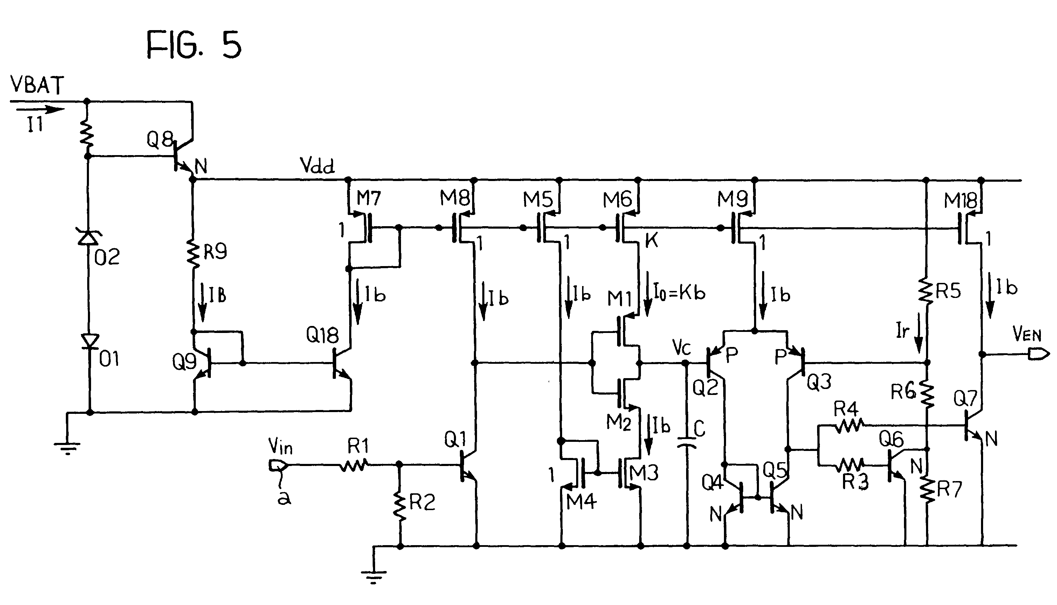

In Figure 5 there is shown a detailed diagram of an embodiment of the stand-by circuit which in Figure 2 is shown in partially block diagram form.

In the embodiment of Figure 5 the voltage stabiliser R of Figure 2 is provided by a diode D1, a zener diode DZ, a resistor R8 connected between the cathode of DZ and the source B, and a transistor Q8 of bipolar type the base of which is connected to the cathode of DZ and the collector of which is connected to the source B. This stabiliser circuit provides at its output a supply voltage Vdd independently of the possible fluctuations in the voltage VBAT of the source B.

The emitter of Q8 is connected, via a resistor R9, to the collector of another transistor Q9 the emitter of which is connected to earth and the base of which is connected to the collector as well as to the base of a further transistor Q10. The emitter of this latter is connected to earth and the collector is connected to the drain of the MOS type transistor M7 the source of which is connected to the emitter of Q8. The gate of M7 is connected to the drain thereof as well as to the gates of further transistors MOS type M8, M5, M6, M9 and M10.

The reference current Ib is the current which flows through the resistor R9 by the effect of the conduction of Q9. This transistor, with transistor Q10, forms a current mirror circuit such that the collector current of Q10 is a "replica" of the current which flows at the collector of Q9, and accordingly is substantially equal to Ib. The transistors M8, M5, M9 and M10 form with the transistor M7 corresponding current mirrors so that their drain currents are also Ib.

The transistor M6 has, in relation to the transistor M7, an aspect ratio K so that its drain current is Ia = K Ib.

The drain of M6 is connected to the source of M1.

A further current mirror circuit formed by two transistors M3 and M4, again of MOS type is disposed between the drain of M5 and the source of M2. Consequently the current which flows between the source of M2 and the drain of M3 also is equal to Ib.

The transistors M6 and M3 of the diagram of Figure 5 accordingly correspond to the current generators G1 and G2 of Figure 2.

The comparator C1 of Figure 2 in the embodiment of Figure 5 is formed by a transistor Q1 of npn bipolar type, the base of which is connected to the input terminal $\underline{a}$ via a resistive potential divider formed by two resistors R1 and R2, the emitter is connected to earth and the collector is connected to the gates of M1 and M2. The threshold voltage Vso is given by:

$$Vso = V_{BE} \ (1+R1/R2)$$

in which $V_{BE}$ represents the base-emitter voltage of the transistor Q1.

In the circuit of Figure 5 the output threshold comparator C2 is formed by the transistors indicated Q2, Q3, Q4, Q5 and Q7.

The transistors Q2 and Q3 are of npn type and their emitters are connected to the drain of M9 and their respective collectors connected to the collectors of Q4 and Q5 which, on the other hand are of npn type.

The base of Q2 is connected to the capacitor C, whilst the base of Q3 is connected to a potential divider formed with three resistors indicated R5, R6 and R7.

The collectors of Q2 and Q3 are connected to the collectors of Q4 and Q5, which are bipolar npn transistors. The emitters of these transistors are connected to earth, whilst their respective bases are connected together and to the collector of Q4.

The collector of Q5 is connected to the base of Q7 via a resistor R4. The collector of Q7 is connected to the drain of M10, whilst its emitter is connected to earth.

The collector of transistor Q7 represents the output of the entire stand-by circuit.

Via a resistor R3 the collector of Q5 is connected to the base of a transistor Q6, the emitter of which is connected to earth and the collector of which is connected between the resistors R6 and R7.

The threshold voltages Vs1 and Vs2 are derived starting from the voltage Vdd by means of the potential divider R5, R6 and R7: the ratio of resistances is changed by short circuiting the resistor R7 by means of the transistor Q6. The thresholds Vsl and Vs2 accordingly assume the values:

$$Vs1 = (Vdd \ R6)/(R5+R6)$$

$$Vs2 = Vdd \ (R6+R7)/(R5+R6+R7)$$

Naturally, the principle of the invention remaining the same, the embodiments and details of construction can be widely varied with respect to what has been described and illustrated purely by way of non-limitative example, without by this departing from the present invention as defined by the following claims.

## Claims

1. A stand-by circuit for controlling the supply of current to a driver circuit (IC) for a DC electric motor (M), in particular a brushless motor; the said driver circuit (IC) having an input for a demand signal ($V_{in}$) indicative of the required speed of rotation of the motor (M), which said demand signal ($V_{in}$) may be a linear analogue signal or PWM digital signal; the stand-by circuit (SBC) being characterised by the fact that it comprises

   an input terminal (a) intended to be connected to the input of the driver circuit (IC); a capacitor (C); first and second current generators (G1, G2); commutation circuit means (M1, M2) operable to connect the said first or second current generators (G1, G2) selectively to the capacitor (C); a first comparator circuit (C1) the input of which is connected to the said input terminal (a) and the output coupled to the said commutation circuit means (M1, M2) in such a way that when the signal ($V_{in}$) applied to the said input terminal (a) exceeds a predetermined threshold (Vso) the said commutation means (M1, M2) connect the capacitor (C) to the first current generator (G1) to charge the said capacitor (C) at constant current, and when the said signal ($V_{in}$) is less than the said threshold (Vso) the said commutation means (M1, M2) uncouple the capacitor (C) from the first current generator (G1) and connect it to the second generator (G2) in such a way as to discharge it at constant current; and a second comparator circuit (C2) operable to emit at its output an enablement signal ($V_{EN}$) which allows current to be supplied to the said driver circuit (IC) when the voltage developed across the capacitor (C) exceeds a predetermined threshold (Vs2).

2. A stand-by circuit according to Claim 1, characterised in that the said first generator (G1) is arranged to generate a constant current (Ia) which is greater than the current (Ib) generated by the second generator (G2).

3. A stand-by circuit according to Claim 1 or Claim 2, characterised in that the said second comparator circuit (C2) is of hysteresis type.

4. A stand-by circuit according to any preceding Claim, characterised in that the said commutation means (M1, M2) comprise first and second transistors (M1, M2) the output paths of which are connected between the said capacitor (C) and the first and second current generator (G1, G2) respectively, and the control terminals of which are connected to the output of the said first comparator circuit (C1).

**Patentansprüche**

1. Bereitschaftsschaltung, um die Stromzufuhr zu einer Ansteuerstufe (IC) für einen Gleichstrommotor (M) zu steuern, im besonderen zu einem bürstenlosen Motor; wobei die Ansteuerstufe (IC) einen Eingang für ein Bedarfssignal ($V_{in}$) besitzt, das die gewünschte Drehzahl des Motors (M) angibt, wobei das Bedarfssignal ($V_{in}$) ein lineares Analogsignal oder ein digitales Signal mit Impulsbreitenmodulation (PWM-Signal) sein kann;

   wobei die Bereitschaftsschaltung (SBC) dadurch gekennzeichnet ist, daß sie enthält:

   - einen Eingangsanschluß (a), der mit dem Eingang der Ansteuerstufe (IC) verbunden werden soll;
   - einen Kondensator (C);
   - einen ersten und zweiten Stromgenerator (G1, G2);
   - eine Umschaltstufe (M1, M2), die dazu dient, um wahlweise den ersten oder zweiten Stromgenerator (G1, G2) mit dem Kondensator (C) zu verbinden,
   - eine erste Vergleicherstufe (C1), deren Eingang mit dem Eingangsanschluß (a) verbunden ist, während ihr Ausgang so an der Umschaltstufe (M1, M2) liegt, daß dann, wenn das am Eingangsanschluß (a) anliegende Signal ($V_{in}$) einen vorgegebenen Schwellwert (Vso) überschreitet, die Umschaltstufe (M1, M2) den Kondensator (C) mit dem ersten Stromgenerator (G1) verbindet, um den Kondensator (C) mit einem konstanten Strom zu laden, und dann, wenn das Signal ($V_{in}$) kleiner als der Schwellwert (Vso) ist, die Umschaltstufe (M1, M2) den Kondensator (C) vom ersten Stromgenerator (G1) trennt und ihn so mit dem zweiten Generator (G2) verbindet, daß dieser ihn mit einem konstanten Strom entlädt; und
   - eine zweite Vergleicherstufe (C2), die dazu dient, um an ihrem Ausgang ein Steuersignal ($V_{EN}$) abzugeben, das dazu dient, um eine Stromzufuhr zur Ansteuerstufe (IC) zu ermöglichen, wenn die am Kondensator (C) entwickelte Spannung einen vorgegebenen Schwellwert (Vs2) überschreitet.

2. Bereitschaftsschaltung gemäß Anspruch 1, dadurch gekennzeichnet, daß der erste Generator (G1) so aufgebaut ist, um einen konstanten Strom (Ia) zu erzeugen, der größer als jener Strom (Ib) ist, den der zweite Generator (G2) erzeugt.

3. Bereitschaftsschaltung gemäß Anspruch 1 oder 2, dadurch gekennzeichnet, daß die zweite Vergleicherstufe (C2) eine Hysterese besitzt.

4. Bereitschaftsschaltung gemäß irgendeinem der bisherigen Ansprüche, dadurch gekennzeichnet, daß die Umschaltstufe (M1, M2) einen ersten und zweiten Transistor (M1, M2) besitzt, der Ausgänge zwischen dem Kondensator (C) und dem ersten bzw. zweiten Stromgenerator (G1, G2) liegen, wobei ihre Steuerelektroden mit dem Ausgang der ersten Vergleicherstufe (C1) verbunden sind.

**Revendications**

1. Circuit de veille pour commander l'alimentation en courant d'un circuit d'attaque (IC) pour un moteur électrique à courant continu (M), notamment un moteur sans balais ; ledit circuit d'excitation (IC) ayant une entrée pour un signal de demande ($V_{in}$) représentatif de la vitesse de rotation requise du moteur (M), ledit signal de demande ($V_{in}$) pouvant être un signal analogique linéaire ou un signal numérique PWM (modulation de largeur d'impulsion) ;

   le circuit de veille (SBC) étant caractérisé par le fait qu'il comprend :

   une borne d'entrée (a) destinée à être connectée à l'entrée du circuit d'attaque (IC) ;
   un condensateur (C) ;
   des premier et second générateurs de courant (G1, G2) ;
   des moyens (M1, M2) à circuits de commutation utilisables pour connecter sélectivement lesdits premier ou second générateurs de courant (G1, G2) au condensateur (C) ;
   un premier circuit comparateur (C1) dont l'entrée est connectée à ladite borne d'entrée (a) et la sortie est reliée auxdits moyens (M1, M2) à circuits de commutation de telle manière que lorsque le signal ($V_{in}$) appliqué à ladite borne (a) d'entrée dépasse un seuil (Vso) prédéterminé, lesdits moyens (M1, M2) de commutation connectent le condensateur (C) au premier générateur (G1) de courant afin de charger ledit condensateur (C) à courant constant, et lorsque ledit signal ($V_{in}$) est inférieur audit seuil (Vso) lesdits moyens (M1, M2) de commutation déconnectent le condensateur (C) du premier générateur (G1) de courant et le connectent au second générateur (G2) de façon à le décharger à courant constant ; et

un second circuit (C2) comparateur utilisable pour émettre à sa sortie un signal ($V_{EN}$) d'activation qui permet de fournir du courant audit circuit (IC) d'excitation lorsque la tension apparaissant aux bornes du condensateur (C) dépasse un seuil (Vs2) prédéterminé.

2. Circuit de veille selon la revendication 1, caractérisé en ce que ledit premier générateur (G1) est conçu pour produire un courant (Ia) constant qui est supérieur au courant (Ib) produit par le second générateur (G2).

3. Circuit de veille selon la revendication 1 ou la revendication 2, caractérisé en ce que ledit second circuit (C2) comparateur est du type à hystérésis.

4. Circuit de veille selon l'une quelconque des revendications précédentes, caractérisé en ce que lesdits moyens (M1, M2) de commutation comprennent des premier et second transistors (M1, M2) dont les voies de sortie sont respectivement connectées entre ledit condensateur (C) et les premier et second générateurs (G1, G2) de courant, et dont les bornes de commande sont connectées à la sortie dudit premier circuit (C1) comparateur.

# FIG. 1

VBAT

ECU → Vin

STAND-BY CIRCUIT — SBC

VEN →

POWER SUPPLY CIRCUIT — PSC

Vcc

DRIVER CIRCUIT — IC

Vo → MOTOR — M

I1   I2   B

a   b   m

EP 0 562 455 B1

# FIG. 2

FIG. 3

EP 0 562 455 B1

# FIG. 4

FIG. 5

EP 0 562 455 B1